# FASCICULE DE BREVET EUROPEEN

(11) **EP 1 478 067 B1**
(45) Date de publication et mention de la délivrance du brevet: **23.11.2016**
(21) Numéro de dépôt: 04300268.2
(22) Date de dépôt: 10.05.2004
(51) Int. Cl.: H02B 1/044

(54) **Terminal de dialogue à montage affleurant**
Bündig montiertes, interaktives Anzeigesystem
Flush mounted interactive terminal

(30) Priorité: 14.05.2003 FR 0305789
(43) Date de publication de la demande: 17.11.2004
(73) Titulaire: Schneider Electric Industries SAS, 92500 Rueil-Malmaison (FR)
(72) Inventeur: Da Dalt, Hugues, 16340 Champniers (FR)

(56) Documents cités:
- EP-B1- 0 962 038
- GB-A- 545 131
- US-A- 4 948 074
- US-A1- 2002 157 844

## Description

La présente invention se rapporte à un terminal de dialogue comprenant, pour se fixer à un support plan, un corps destiné à se loger dans une ouverture du support, de manière à affleurer la face avant du support, et des moyens de fixation réglable du corps relativement au support.

De tels terminaux sont couramment mis en oeuvre dans des installations industrielles pour dialoguer avec une machine ou un automatisme. En général, le terminal est de forme parallélépipédique, comprend un afficheur ou un écran et des touches, et il est encastré dans une ouverture rectangulaire d'un panneau, pupitre ou plan de support analogue. L'encastrement s'effectue par l'avant et le corps du terminal est doté à cet effet d'un rebord qui s'applique contre le bord de l'ouverture. Pour fixer le terminal au support, on utilise en général des moyens de serrage mis en oeuvre du côté arrière du panneau (voir le document EP 0 962 038).

Il s'avère parfois nécessaire de rapporter, sur le côté avant du support, une feuille de personnalisation et/ou de protection qui donne un aspect lisse à l'aire de dialogue et permet de recouvrir les touches et éventuellement l'afficheur. La feuille porte des indications propres à l'utilisateur et permet d'éviter des projections ou salissures diverses de la face de dialogue du terminal. L'adjonction d'une telle feuille de personnalisation et/ou de protection suppose que le terminal ne dépasse pas de la face avant du support et affleure simplement cette face. Une première difficulté à surmonter réside alors dans la nécessité de régler avec précision l'affleurement afin d'éviter de dégrader la visibilité de l'affichage et l'effet tactile des touches. Une deuxième difficulté à surmonter réside dans l'épaisseur, très sensiblement variable, par exemple de l'ordre de 1,5mm à 6mm, du support.

L'invention a pour but d'autoriser de manière simple un montage affleurant d'un terminal de dialogue relativement à un support plan, ce montage impliquant notamment une grande facilité de pose et de dépose, ainsi qu'un réglage fin de l'affleurement, et s'adaptant à des épaisseurs fortement variables du support.

Selon l'invention, les moyens de fixation réglable comprennent
- d'une part un cadre de fixation rapporté de manière amovible à l'arrière du corps du terminal et solidarisé avec celui-ci par des éléments de fixation, et
- d'autre part des entretoises filetées, d'axes perpendiculaires au support, qui présentent des têtes montées dans le support et prenant appui en butée vers l'arrière contre des bords d'orifices du support ; de plus, les entretoises filetées sont solidarisées avec le support avant montage du cadre, traversent des brides du cadre et coopèrent avec des écrous afin de régler la position des brides et ainsi le positionnement en profondeur de l'ensemble cadre-corps par rapport à la face avant du support.

L'organe de fixation est de préférence un cadre, harnais ou organe rigide de bridage analogue solidarisé avec le corps du terminal au moyen de blocs de fixation rapide, les blocs de fixation étant disposés de façon amovible entre une aile du cadre parallèle aux brides et un élément d'accrochage prévu sur ou dans le corps.

Le corps du terminal peut être de forme prismatique et être doté à l'avant d'un rebord logé dans le contour de l'ouverture du support, tandis que le cadre de fixation associé au corps présente une ceinture adaptée au contour du corps et au moins un bord destiné à buter vers l'avant contre le rebord du corps.

De préférence, les entretoises filetées ont chacune une tête mince qui est noyée dans un lamage prévu dans la face avant du support, ou qui, lorsqu'il existe une plaque de compensation d'épaisseur appliquée à l'avant du support, est noyée dans un orifice de la plaque. Les entretoises sont avantageusement immobilisées en rotation par rapport au support, mais elles peuvent aussi être remplacées au choix par des vis, ou des goujons vissés dans le support, ou des goujons soudés au support.

Les caractéristiques et avantages de l'invention vont apparaître dans la description détaillée qui suit d'un mode de réalisation, avec référence aux dessins annexés.
La figure 1 représente en perspective vue de l'avant un terminal industriel monté de manière protégée en affleurement avec la face avant d'un support tel qu'un pupitre.
La figure 2 est une vue arrière en perspective du terminal.
La figure 3 est une vue similaire à la figure 2, montrant de façon éclatée le terminal et ses moyens de montage.
La figure 4 est une vue de côté en coupe selon le plan IV-IV de la figure 2.
La figure 5 montre le détail A de la figure 4 à plus grande échelle.
La figure 6 montre en perspective arrière agrandie le détail A.
La figure 7 illustre de façon analogue à la figure 5 une variante de montage du terminal.

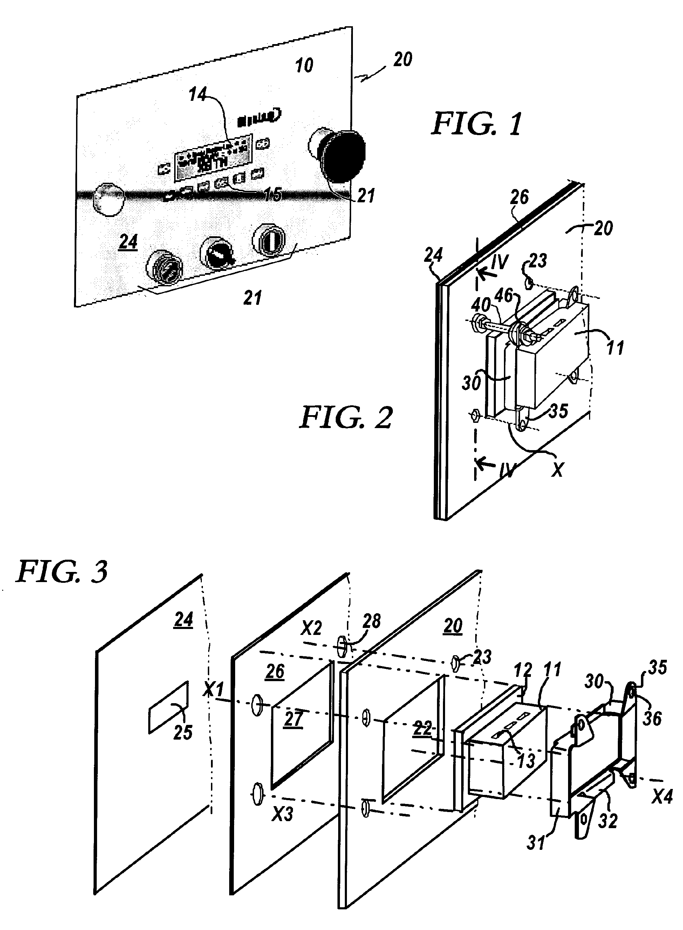

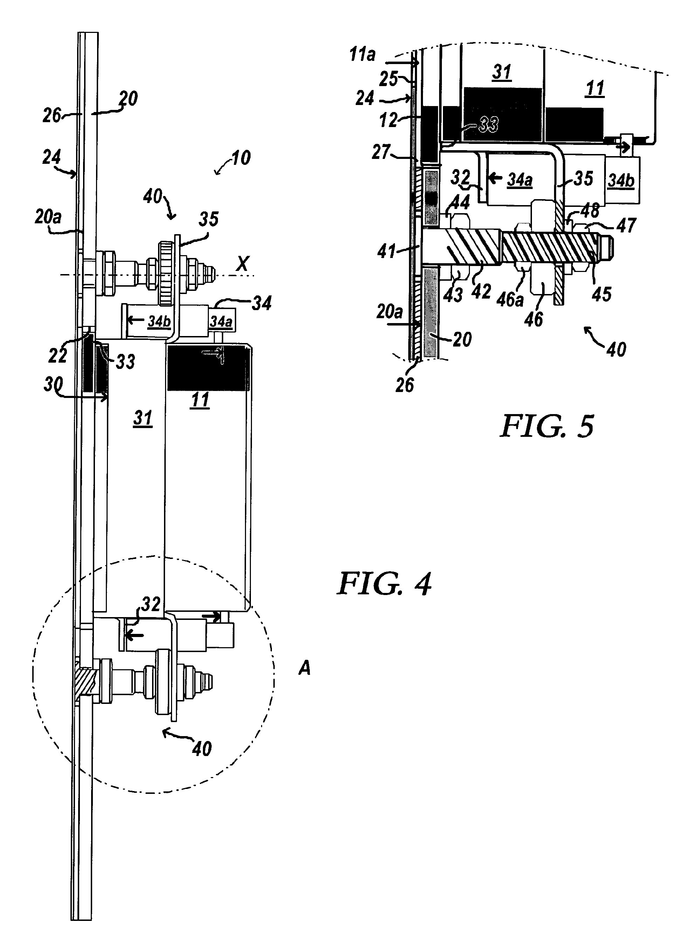

Le terminal illustré sur les figures est un terminal de dialogue industriel 10 présentant un corps 11 et monté sur un support plan 20 tel qu'un panneau, un pupitre ou une aire plane, au moyen d'un organe de fixation 30 tel qu'un cadre, harnais, bride ou autre organe analogue applicable sur le corps pour le serrer. L'organe de fixation 30 est rapporté de manière amovible à l'arrière du corps 11. Ce corps 11 est sensiblement prismatique et est doté vers l'avant d'un rebord de montage 12. Sur au moins deux côtés, par exemple les côtés horizontaux, le terminal a des lumières d'accrochage 13 dont le rôle sera expliqué plus loin. Vers l'avant, le corps du terminal possède une face avant 11a dotée d'un afficheur ou écran 14 (voir figure 1) et, à côté de celui-ci, de touches 15 de dialogue, la face avant du corps devant affleurer la face avant 20a du support (voir figure 5). Il convient de noter que le rebord 12, prévu pour s'immobiliser habituellement contre le pourtour avant d'une ouverture rectangulaire 22 du support 20, ne fait ici que se loger dans cette ouverture 22 de forme adaptée (ici rectangulaire) sans prendre appui contre ses bords. Les côtés avant et arrière du terminal sont désignés comme tels en fonction de la position normale de dialogue de l'opérateur.

Le support 20 est par ailleurs pourvu d'autres éléments de dialogue 21, tels que boutons-poussoirs de marche/arrêt, de commutation, d'arrêt d'urgence, etc ..Pour laisser passer les entretoises de fixation qui seront décrites plus loin, le support 20 présente quatre orifices 23 situé près des coins de l'ouverture rectangulaire 22, les axes des orifices X1-X4 étant parallèles à une direction transversale au plan du support.

L'utilisateur recouvre le support 20 avec une feuille de protection et de personnalisation 24. Cette feuille peut recouvrir partiellement le support, mais de préférence elle le recouvre complètement de manière étanche en laissant, comme illustré figure 3, une lucarne transparente de visualisation 25 en face du seul afficheur 14. La feuille 24 présente en outre des passages pour les éléments de dialogue 21. La feuille 24 est en matière appropriée à l'environnement de travail et peut par exemple être en polyester.

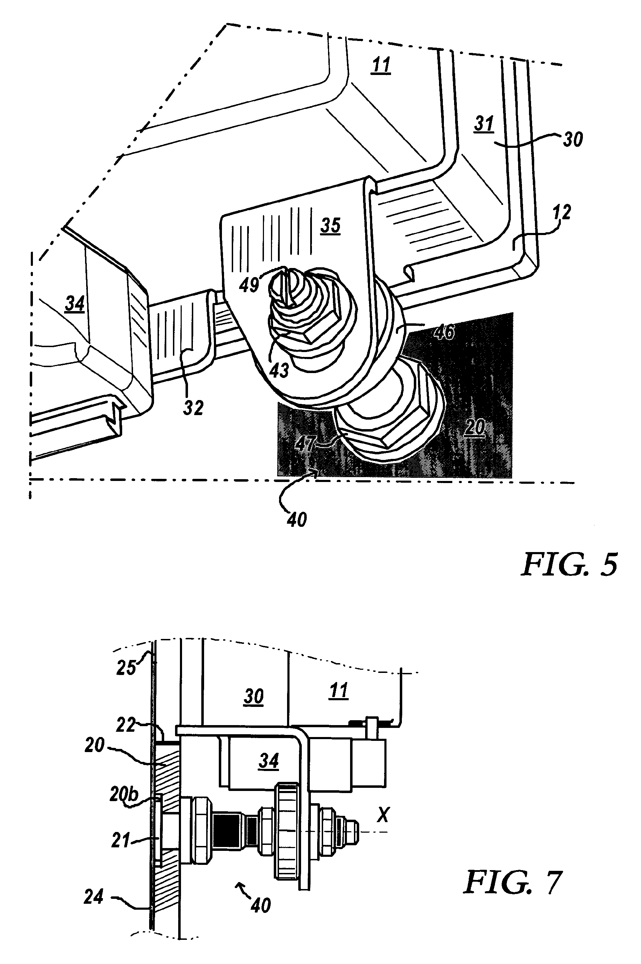

Dans un premier mode de réalisation, adapté aux supports de faible épaisseur, une plaque de compensation 26 (voir figures 2 et 3) est intercalée entre le support 20 et la feuille de protection 24. La plaque 26 possède une ouverture de montage 27 dimensionnée comme l'ouverture 22 et des orifices 28 coaxiaux aux orifices 23. Dans un deuxième mode de réalisation (voir figure 7), adapté aux supports de plus forte épaisseur, il n'y a pas de plaque de compensation.

Des entretoises filetées 40 d'axes parallèles X1-X4 sont disposées pour fixer, de manière réglable en profondeur, le terminal à l'arrière du support 20. Les entretoises 40 sont au nombre de trois ou quatre et sont immobilisées en rotation. Elles peuvent aussi être des goujons soudés au support ou sertis sur le support, ou encore des inserts métalliques, ou encore des vis fixées par écrous au support.

Le cadre 30, rigide et réalisé en tout matériau approprié, se présente sous forme d'une ceinture 31 de forme adaptée au contour standard du corps et dotée de deux rebords, ailes ou éléments analogues verticaux d'appui 32 et de bords de butée 33. Les rebords verticaux 32 coopèrent à l'état monté avec des blocs respectifs 34 destinés à assurer la fixation rapide du cadre au corps 11 par serrage élastique. Les bords de butée 33 s'appliquent contre le côté arrière du rebord 12 du corps 11 du terminal. Ces blocs fonctionnent par exemple par effet de came ou d'arc-boutement et, dans ce dernier cas, ils peuvent être conformes à ceux décrits dans le brevet EP 0 962 038. Le cadre 30 est pourvu de brides de fixation 35, pliées à angle droit par rapport à la ceinture et formant des oreilles qui dépassent en hauteur le contour du corps. Les brides sont en nombre égal à celui des entretoises, et sont dotées d'orifices 36 de passage pour les entretoises. Il va de soi que le cadre peut être immobilisé sur le corps du terminal par d'autres moyens de fixation amovibles.

Dans la forme d'exécution représentée, les entretoises 40 présentent chacune une tête plate noyable 41. La tête 41 se loge selon le cas dans un lamage 20b ménagé dans la face avant du support 20 ou dans l'orifice 28 de la plaque de compensation 26. Dans le premier cas, la tête noyée 41 a une épaisseur inférieure à celle du support 20. Dans le second cas, la tête noyée 41 a une épaisseur égale ou inférieure à celle de la plaque de compensation 26. L'entretoise présente une première partie filetée 42 destinée à porter un écrou 43 de fixation au support, avec une rondelle 44, une deuxième partie filetée 45 définissant la distance de réglage et destinée à porter un écrou de réglage 46, avec un contre-écrou de blocage, ainsi qu'un écrou 47 de fixation du cadre, avec une rondelle 48. La première partie filetée a un diamètre supérieur à celui de la deuxième partie filetée. L'extrémité libre 49 de l'entretoise 40, située à l'arrière, est fendue.

La figure 7 illustre le cas explicité plus haut où, le support 20 ayant une épaisseur suffisante pour loger la tête plate 41 d'entretoise, on supprime la plaque intercalaire de compensation 26 et on loge la tête plate dans le lamage 20b.

Le terminal représenté sur les figures se monte de la manière suivante. On suppose que les ouvertures et orifices sont préalablement découpés dans le support 20 et la plaque de compensation 26 (quand cette dernière est prévue). Le cadre 30 est glissé contre le corps 11 du terminal jusqu'à butée de ses bords 33 contre la face arrière des rebords 12 du corps 11 ; les blocs de serrage 34 sont accrochés dans les lumières 13 du corps, puis actionnés pour être mis en position d'arc-boutement comme décrit dans le document EP 0 962 038. On rappelle que leur partie 34a s'applique alors contre un élément d'appui 32 du cadre et qu'un talon de leur partie 34b s'applique contre le bord de la lumière respective 13 du corps. Le cadre 30 est alors solidarisé avec le corps 11.

Les entretoises 40 sont ensuite engagées dans les orifices 23 du support 20 et leurs têtes plates 41 noyées dans les orifices 28 de la plaque intercalaire de compensation 26 (figures 2 à 5) ou dans les lamages 20a du support (figure 7). Les écrous 43 sont engagés avec les rondelles 44 sur la première partie filetée 42, puis les écrous 43 sont serrés pour fixer les entretoises 40 par rapport au support 20 et/ou à la plaque 26. L'écrou de butée 46 est ensuite engagé avec un contre-écrou sur la deuxième partie filetée 45. L'ensemble formé par le terminal 10 et le cadre 30 est posé sur les entretoises 40, par engagement des brides 35, avec leurs orifices 36, sur les entretoises. Le réglage de la position du terminal 10 relativement au support 20 s'obtient par l'ajustement de l'écrou de butée 46 sur la longueur du deuxième filetage 45, et immobilisation de l'écrou 46 au moyen d'un moyen d'immobilisation 46a tel qu'un contre-écrou, de façon que la face avant du terminal 10 affleure la face avant 20a du support (ou de la plaque 26), puis le terminal est immobilisé dans la position souhaitée par serrage des écrous 47.

La feuille de protection 24 peut alors être rapportée à l'avant du support ou de la plaque de compensation.

Le terminal est ainsi facile à monter et démonter sur des supports plans d'épaisseur variable et l'on notera en particulier que, lors d'un changement de terminal, la position de montage est conservée par les écrous de réglage 46.

## Revendications

1. Terminal de dialogue comprenant un corps destiné à se loger dans une ouverture d'un support plan (20), de manière à affleurer une face avant (20a) du support, et comprenant du côté arrière du support des moyens de fixation réglable du corps relativement au support,
***caractérisé par le fait que***
- les moyens de fixation réglable comprennent
- d'une part un cadre de fixation (30) rapporté de manière amovible à l'arrière du corps (11) du terminal et solidarisé avec celui-ci par des éléments de fixation (34), et
- d'autre part des entretoises filetées (40), d'axes perpendiculaires au support, qui présentent des têtes (41) montées dans le support (20) et prenant appui en butée vers l'arrière contre des bords d'orifices (23) du support,
- les entretoises filetées (40) sont solidarisées avec le support (20) avant montage du cadre (30), traversent des brides (35) du cadre et coopèrent avec des écrous afin de régler la position des brides et ainsi le positionnement en profondeur de l'ensemble cadre (30)-corps (11) par rapport à la face avant (20a) du support.

2. Terminal selon la revendication 1, ***caractérisé par*** un corps de forme prismatique (11) doté à l'avant d'un rebord (12) logé dans le contour de l'ouverture (22) du support, le cadre (30) présentant une ceinture (31) adaptée au contour du corps du terminal et au moins un bord (33) de butée vers l'avant contre le rebord (12) du corps.

3. Terminal selon la revendication 1, ***caractérisé par le fait que*** les entretoises filetées (40) ont chacune une tête mince (41) noyée dans un lamage (20b) prévu dans la face avant du support (20).

4. Terminal selon la revendication 1, ***caractérisé par le fait que*** les entretoises filetées (40) ont chacune une tête mince (41) noyée dans un orifice (28) d'une plaque de compensation (26) appliquée à l'avant du support (20), la tête (41) prenant appui vers l'arrière contre un bord de l'orifice 23 du support (20)

5. Terminal selon la revendication 1, ***caractérisé par le fait que*** les éléments de fixation (34) sont des blocs de fixation rapide, lesquels blocs sont disposés de façon amovible entre une aile (32) du cadre parallèle aux brides (35) et un élément d'accrochage (13) prévu sur ou dans le corps.

6. Terminal selon la revendication 1, **caractérisé par le fait que** les entretoises filetées (40) présentent une première partie filetée (42) pour assurer leur fixation directe par écrou au support (20) et une deuxième partie filetée (45) définissant la distance de réglage de l'ensemble cadre (30)-corps (11), le diamètre de la première partie étant supérieur à celui de la deuxième partie.

## Patentansprüche

1. Dialogendgerät, das einen Körper, der dazu bestimmt ist, in einer Öffnung eines ebenen Trägers (20) so aufgenommen zu werden, dass er mit einer vorderen Fläche (20a) des Trägers bündig ist, und auf der Rückseite des Trägers Mittel zum einstellbaren Befestigen des Körpers in Bezug auf den Träger umfasst,
**dadurch gekennzeichnet, dass**
- die Mittel zum einstellbaren Befestigen Folgendes umfassen:
- einerseits einen Befestigungsrahmen (30), der an der Rückseite des Körpers (11) des Endgeräts abnehmbar angebracht ist und damit durch Befestigungselemente (34) fest verbunden ist, und
- andererseits Gewindeabstandshalter (40) mit zu dem Träger senkrechten Achsen, die Köpfe (41) aufweisen, die in dem Träger (20) montiert sind und sich in Rückwärtsrichtung an Rändern von Öffnungen (23) des Trägers anschlagend abstützen, und
- die Gewindeabstandshalter (40) an dem Träger (20) vor der Montage des Rahmens (30) fest angebracht sind, Stege (35) des Rahmens durchqueren und mit Muttern zusammenwirken, um die Position der Stege und somit die Positionierung in Tiefenrichtung der Anordnung aus Rahmen (30) und Körper (11) in Bezug auf die vordere Fläche (20a) des Trägers einzustellen.

2. Endgerät nach Anspruch 1, **gekennzeichnet durch** einen prismenförmigen Körper (11), der an der Vorderseite mit einer Kante (12) versehen ist, der im Umfang der Öffnung (22) des Trägers aufgenommen ist, wobei der Rahmen (30) eine Leiste (31), die an den Umfang des Körpers des Endgeräts angepasst ist, und wenigstens einen Rand (33), der in Vorwärtsrichtung am der Kante (12) des Körpers anschlägt, aufweist.

3. Endgerät nach Anspruch 1, **dadurch gekennzeichnet, dass** die Gewindeabstandshalter (40) jeweils einen dünnen Kopf (41) aufweisen, der in eine Versenkung (20b) eingesetzt ist, die in der vorderen Fläche des Trägers (20) vorgesehen ist.

4. Endgerät nach Anspruch 1, **dadurch gekennzeichnet, dass** die Gewindeabstandshalter (40) jeweils einen dünnen Kopf (41) aufweisen, der in eine Öffnung (28) einer Ausgleichsplatte (26), die auf die Vorderseite des Trägers (20) aufgebracht ist, eingesetzt ist, wobei sich der Kopf (41) in Rückwärtsrichtung an einem Rand der Öffnung (23) des Trägers (20) abstützt.

5. Endgerät nach Anspruch 1, **dadurch gekennzeichnet, dass** die Befestigungselemente (34) Schnellbefestigungsblöcke sind, wobei die Blöcke abnehmbar zwischen einem Flügel (32) des Rahmens parallel zu den Stegen (35) und einem Einhakelement (13), das an oder in dem Körper vorgesehen ist, angeordnet sind.

6. Endgerät nach Anspruch 1, **dadurch gekennzeichnet, dass** die Gewindeabstandshalter (40) einen ersten Gewindeabschnitt (42), um ihre direkte Befestigung durch eine Mutter an dem Träger (20) sicherzustellen, und einen zweiten Gewindeabschnitt (45), der den Einstellabstand der Anordnung aus Rahmen (30) und Körper (11) definiert, aufweisen, wobei der Durchmesser des ersten Abschnitts größer ist als jener des zweiten Abschnitts.

## Claims

1. A dialog terminal comprising a body for accommodating in an opening of a flat support (20), in such a way as to be flush with a front face (20a) of the support and comprising at the back side of the support adjustable fastening means of the body relative to the support,
**characterized in that**:
- the adjustable fastening means comprise:
- on the one hand, a fastening frame (30) removably mounted to the back of the terminal body (11) and secured to it by means of fasteners (34), and
- on the other hand, threaded spacers (40) having axes perpendicular to the support, which have heads (41) mounted within the support (20) and having stop towards the back against edges of support holes (23),
- the threaded spacers (40) are fixed to the support (20) prior to assembly of the frame (30), traverse the flanges (35) of the frame, and cooperate with nuts in order to control the position of the flanges and thus the positioning in depth of the frame (30) - body (11) assembly relative to the front face (20a) of the support.

2. The terminal according to Claim 1, **characterized in** a prismatic body (11) provided at the front with a rim (12) housed in the contour of the opening (22) of the support, the frame (30) having a strip (31) adapted to the contour of the terminal body and at least one stop edge (33) towards the front against the rim (12) of the body.

3. The terminal according to Claim 1, **characterized in that** the threaded spacers (40) each have a thin countersunk head (41) in a recess (20b) provided in the front face of the support (20).

4. The terminal according to Claim 1, **characterized in that** the threaded spacers (40) each have a thin head (41) countersunk into a hole (28) of a compensation plate (26) applied to the front of the support (20), the head (41) being supported towards the back against an edge of the hole (23) of the support (20).

5. The terminal according to Claim 1, **characterized in that** the fastening elements (34) are quick-fastening blocks, said blocks being arranged immovably between a wing (32) of the frame parallel to the flanges (35) and a latching element (13) provided on or in the body.

6. The terminal according to Claim 1, **characterized in that** the threaded spacers (40) have a first threaded part (42) for assuring their direct fixation by nut to the support (20) and a second threaded part (45) defining the adjustment distance of the frame (30) - body (11) assembly, the diameter of the first part being greater than that of the second part.
